# EUROPEAN PATENT SPECIFICATION

(11) **EP 2 651 746 B1**
(45) Date of publication and mention of the grant of the patent: **25.02.2015**
(21) Application number: 10819721.1
(22) Date of filing: 17.12.2010
(51) Int. Cl.: B62D 7/14, B62D 7/15

(54) **A POWER STEERING SYSTEM FOR A VEHICLE HAVING TWO STEERED AXLES**
SERVOLENKSYSTEM FÜR EIN FAHRZEUG MIT ZWEI GESTEUERTEN ACHSEN
SYSTÈME DE DIRECTION ASSISTÉE POUR UN VÉHICULE POSSÉDANT DEUX ESSIEUX DIRECTEURS

(43) Date of publication of application: 23.10.2013
(73) Proprietor: Volvo Lastvagnar AB, 405 08 Göteborg (SE)
(72) Inventor: BLOND, Jean-Marc, F-69780 Saint Pierre de Chandieu (FR); BOITARD, Philippe, F-69800 Saint Priest (FR); DORAY, Jean-Baptiste, F-38670 Chasse sur Rhone (FR)
(74) Representative: Faucheux, Jérôme
(86) International application number: PCT/IB2010/003485
(87) International publication number: WO 2012/080774

(56) References cited:
- WO-A1-92/06881
- WO-A1-2007/122102
- DE-A1- 10 065 186
- DE-A1- 10 230 309

## Description

### Field of the invention

The present invention relates to a power steering system for a vehicle having two steered axles, especially an industrial vehicle such as a heavy truck.

### Technological background

A power steering system has been a standard feature in vehicles for many years, in particular in industrial vehicles. Such a system assists the vehicle driver by applying a force to the wheels, through a hydraulic steering actuator, which complements the effort of the driver which is mechanically transmitted from the steering wheel to the steered wheels of the vehicle. Therefore, a lower effort is required for the driver when turning the steering wheel and the vehicle is easier to manoeuvre.

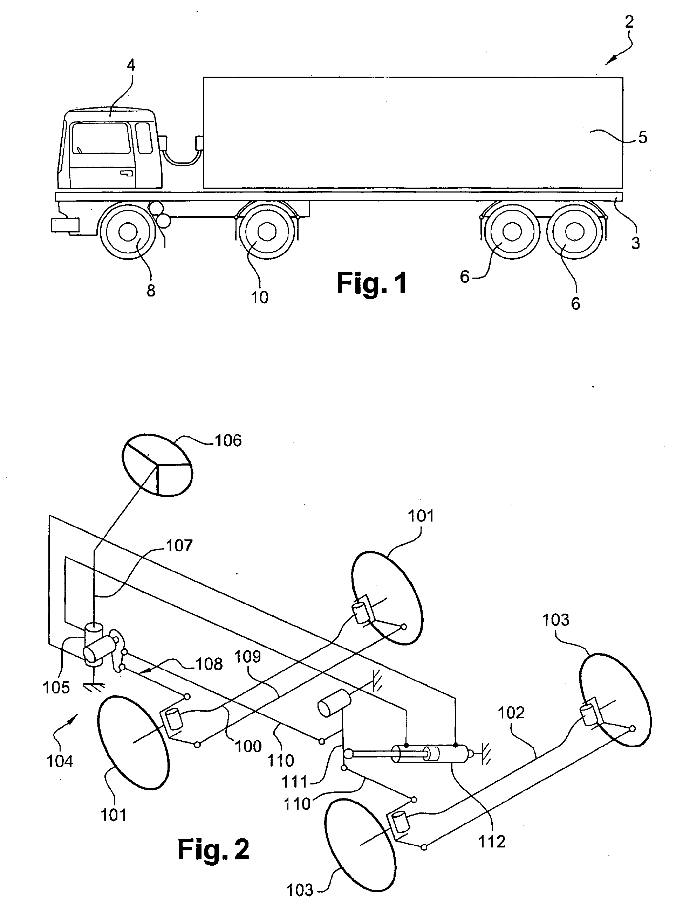

Also know is a power steering system for a vehicle having two steered axles. Such a system of the prior art is illustrated in Figure 1 and will now be described. In the described example, the vehicle has two front axles, and the two steered axles are the two front axles. Nevertheless, in some cases, one steered axle may be a front axle and the second steered axle may be a rear axle.

The vehicle comprises a first steered axle 100 joining two first wheels 101 and a second steered axle 102 joining two second wheels 103, said second steered axle 102 being located rearward from the first steered axle 100.

Typically, this power steering system 104 comprises a steering gear 105 including a hydraulic actuator (not shown) to which the movement of a steering wheel 106 is transmitted via a steering column 107. This movement is reinforced by hydraulic pressure from a pump (not shown), and then transmitted by a mechanical arrangement 108 to one of the first wheels 101. A transverse track rod 109 transmits the movement of said first wheel to the other first wheel.

Steering to the second axle 102 is achieved via one or more link rods 110, a possible intermediate arm 111 fixed on the vehicle frame, and a second actuator 112 which is hydraulically connected to the hydraulic actuator of the steering gear 105. The purpose of the link rods 110 is to set the steering angle of the second axle 102 according to the steering angle of the first axle 100, while the second actuator 112 is used to transmit servo power on the second axle 102. Document DE 102 30 309 A1 discloses the technical features of the preamble of claim 1.

However, two significant drawbacks of such a conventional power steering system are that it comprises heavy and expensive parts, and that it requires space - while the corresponding allotted space is generally limited. Therefore, the implementation of such a system leads to heavy packaging work and involves some limitations due to the size of the wheels and/or of the frame.

It therefore appears that, from several standpoints, there is room for improvement in power steering systems for vehicles.

### Summary

It is an object of the present invention to provide an improved power steering system for a vehicle having two front steered axles, i.e. a first steered axle joining two first wheels, and a second steered axle joining two second wheels.

The two steered axles can be two front axles. In such a case said second steered axle can located rearward from the first steered axle, although the reverse is also possible.

Another object of the invention is to provide a power steering system which requires less space than the prior art systems and which has a reduced weight, while also being effective and reliable.

Preferably, the power steering system comprises a mechanical transmission of the movement from the steering wheel of the vehicle to the first steered wheels.

According to the invention, such a power steering system comprises:
- a first controlling device (14) designed to control the steering of at least one of the first wheels (8), said first controlling device (14) comprising:
   - a mechanical transmission of the movement from a steering wheel of the vehicle to at least one of the first wheels;
   - a first hydraulic actuator (16) which is force-controlled;
- a second controlling device designed to control the steering of at least one of the second wheels, said second controlling device comprising:
   - a second hydraulic actuator which is force-controlled;
   - and an additional actuator capable of acting on at least one of the second wheels simultaneously with the second hydraulic actuator, said additional actuator being displacement-controlled, by a controller, relative to a position instruction.

Thus, in a power steering system according to the invention, the first wheels receive a steering assistance effort by means of a first hydraulic actuator which is force-controlled, for example as a function of the steering effort exerted by the driver on the steering wheel.

As regards the second wheels, they are steered by means of two actuators acting simultaneously, namely:
- a second hydraulic actuator which is force-controlled, and which can typically derive the effort information from the first hydraulic actuator, i.e. from the steering assistance provided to the first wheels;
- and an additional actuator which is displacement-controlled, for example as a function of the steering angle of the steering wheel or of the steering column, typically detected by an appropriate sensor.

As the proper angular positioning of the second wheels can be obtained by means of the additional actuator, it does not necessarily need to be caused and imposed by a mechanical link to the first wheels. As a result, there is no need to provide the power steering system with one or more link rods as in the prior art, which means that the corresponding drawbacks are avoided.

Furthermore, because of this disposition, the second axle can be over steered or under steered as compared with the first axle, for example depending on the vehicle speed, in order to improve stability, or over steered at high angle / low speed in order to decrease the steering radius.

These and other features and advantages will become apparent upon reading the following description in view of the drawing attached hereto representing, as a non-limiting example, an embodiment of a power steering system according to the invention.

### Brief description of the drawings

The following detailed description of several embodiments of the invention is better understood when read in conjunction with the appended drawings being understood, however, that the invention is not limited to the specific embodiments disclosed.
Figure 1 is a schematic perspective view of a power steering system of the prior art;
Figure 2 is a side view of a vehicle having two front steered axles;
Figure 3 is a schematic perspective view of a power steering system according to the invention, which can be implemented in the vehicle of Figure 2.

### Detailed description of the invention

The invention concerns a power steering system 1 which is intended for a vehicle having two front steered axles. Typically, such a vehicle can be a heavy duty truck such as those used at building sites or for roadwork.

Such a vehicle 2 is illustrated in Figure 2. The vehicle comprises a frame 3, a cab 4 and a rear part 5 which can be, for example, a dump body. The vehicle 2 has rear axles, typically two rear axles which each join two rear wheels 6, as well as two front steered axles, i.e.:
- a first steered axle 7 joining two first wheels 8;
- and a second steered axle 9 joining two second wheels 10, said second steered axle 9 being located rearward from the first steered axle 7.

The vehicle 2 can be equipped with a power steering system 1 according to the invention, which will now be described.

The steering of the first wheels 8 is controlled by a conventional first controlling device 14.

In the illustrated embodiment, the first controlling device 14 comprises a conventional mechanical transmission of the movement from a steering wheel of the vehicle to at least one of the first wheels. This mechanical transmission may include a steering wheel 12, or any other type of driver interface member, which is mechanically connected to a steering column 13 to drive a steering gear 15 which is connected to the first wheels 8 by a mechanical arrangement. This mechanical arrangement may include a drop arm 17 which transmits the steering movement from the steering gear 15 to an upper steering arm 18 via a drag link 19. From the upper steering arm 18, the movement continues to the steering knuckle 20 which makes the first wheel 8 turn. To make sure that the other first wheel 8 turns too, the steering wheel movement is transmitted from the steering knuckle 20 with the aid of a lower steering arm 21, a track rod 22 and a further lower steering arm 23 to the steering knuckle 24 of the other first wheel 8. Thus, the first controlling device comprises an entirely mechanical transmission system for transmitting the movements of the steering wheel to the first wheel 8. The steering gear can for example be of the ball and nut type, as in the shown example, to change the rotating movement of the steering column in another rotating movement, for example around a perpendicular axis. The steering gear could alternatively be of the rack and pinion type to transform the rotating movement of the steering column into a linear movement.

The first controlling device comprises a first hydraulic actuator 16 which is force-controlled. The effort delivered by the first hydraulic actuator is preferably set as a function of a steering effort exerted by the driver on the steering wheel. Such an effort is dependent on the resisting effort which the ground exerts on the first wheels of the vehicle, opposing their movement around their steering axis. In a conventional embodiment, the first hydraulic actuator is integrated with the steering gear and is a two way actuator which receives pressurized fluid in one of its two chambers depending on the torque exerted by the driver on the steering wheel. Typically, a control valve is operated based on slights deformations which are induced by the steering and resisting efforts on a torque rod which is part of the mechanical transmission system in the steering gear 25.

The first controlling device 14 can further comprise a pump 25 which is coupled to a hydraulic fluid tank and which is capable of delivering said hydraulic fluid for the hydraulic actuator in order to provide a steering assistance.

In order to make the second wheels turn and to provide them with a steering assistance, the power steering system 1 further comprises a second controlling device 30.

The second controlling device 30 comprises a second hydraulic actuator 31 which is force-controlled. In practice, the second hydraulic actuator 31 can be hydraulically coupled to the first hydraulic actuator 16, so that the pressure in the hydraulic chambers of the second hydraulic actuator 31 is substantially identical to the pressure in the hydraulic chambers of the first hydraulic actuator 16. Therefore, the second hydraulic actuator 31 is controlled as a function of the steering effort exerted by the driver on the steering wheel. This can be achieved by means of a first conduit 32 providing a fluid communication between one chamber 33 of the first and second hydraulic actuators 16, 31, and a second conduit 34 providing a fluid communication between the other chamber 35 of the first and second hydraulic actuators 16, 31. It must be noted that the steering effort exerted by the driver on the steering wheel is essentially dependent on the effort needed to turn the first wheels and is essentially independent of the efforts needed to turn the second wheels.

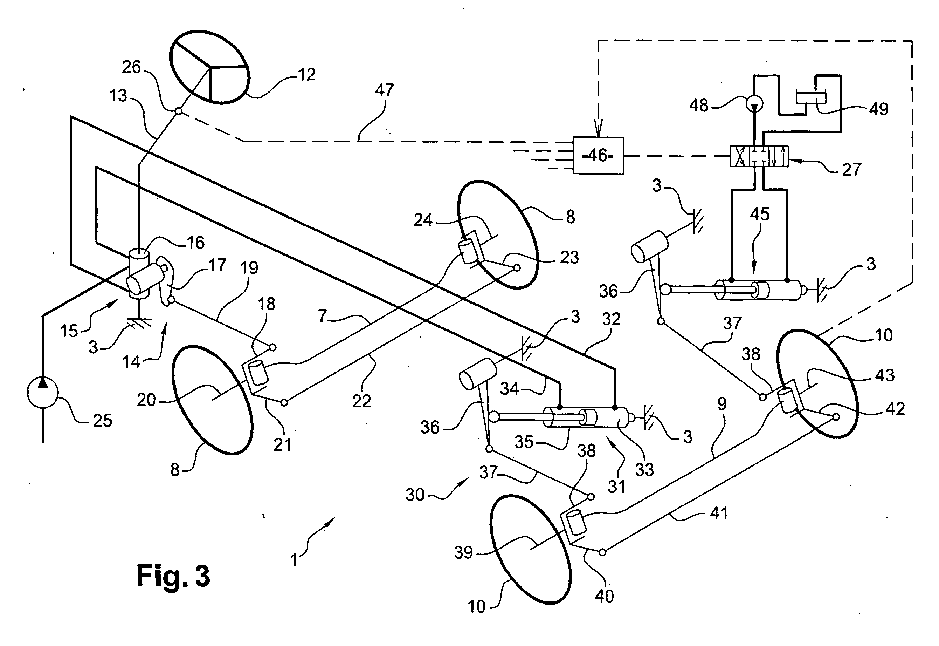

In practice, as shown in Figure 3, the second hydraulic actuator 31 can be mounted between the vehicle frame 3 and a left intermediate arm 36 mounted on said frame 3. In the shown example, the left intermediate arm 36 is mounted on the frame 3 by one extremity so as to pivot around a substantially horizontal transverse axis, it extends essentially downwards, and it is therefore comparable to the drop arm 17 of the first controlling device 14. The movement of said left intermediate arm 36 is transmitted to one second wheel 10 by means of a left drag link 37 which is pivotally connected at the lower end of the left intermediate arm 36 and which extends longitudinally towards the rear. At its rear end, the left drag ling 37 is articulated to an upper steering arm 38 which is integral with a left steering knuckle 39 on which a left second wheel 10 is mounted. A left lower steering arm 40, integral with left steering knuckle 39, and a right lower steering arm 42 integral with a right steering knuckle 43 on which is mounted a right second wheel 10, are connected together by a transverse track trod 41 which is articulated at its ends with one of the lower steering arms 40, 42 to ensure that the right second wheel 10 also turns by means of the second hydraulic actuator 31.

The second controlling device 30 further comprises an additional actuator 45 which is capable of acting on at least one of the second wheels 10 simultaneously with the second hydraulic actuator 31.

In the illustrated embodiment, the second hydraulic actuator 31 is designed to provide assistance directly to the left second wheel 10, while the additional actuator 45 is designed to provide assistance directly to the right second wheel 10, being understood that both second wheels 10 benefit from the effects of both actuators 31, 45 by means of the track rod 41 and the lower steering arms 40, 42. However, another arrangement wherein the two actuators 31, 45 of the second controlling device 30 would directly act on the same second wheel 10 can be envisaged. In a further alternate embodiment, one or both actuators could be connected to the track rod 41.

In the embodiment shown in Figure 3, the additional actuator 45 can be mounted between the vehicle frame 3 and a right intermediate arm 36 mounted on said frame 3. The movement of said intermediate arm 36 is transmitted to the right second wheel 10 by means of a right drag link 37, a right upper steering arm 38 and the right steering knuckle 43, all of which are, in this embodiment, mirror images of the corresponding left parts described above, with respect to a central longitudinal and vertical plane of the vehicle

According to the invention, the additional actuator 45 is displacement-controlled relative to a position instruction 47, by a controller 46 which can typically be an electronic controller. The electronic controller 46 typically is preferably connected to a vehicle databus and can therefore calculate a desired steering angle for the second wheels, depending on a number of parameters which, in addition to the position instruction, can include on or several of the vehicle speed, the vehicle weight, the vehicle weight distribution, the road surface adhesion, potential vehicle slippage detected by an electronic stability control program, etc..

Said position instruction 47 can be set from a control member of the steering, on which the driver can act, preferably a steering angle of the steering wheel 12 detected on the steering column, which may for example be detected by an appropriate sensor 26 on the steering column. Nevertheless, the steering position instruction can be taken from any part of the mechanical transmission which ensures the rotation of the first steered axle. The steering position instruction is representative of the steering angle of any one of the first wheels. Preferably, the controller 46 can be capable of controlling the additional actuator 45 according to said position instruction 47 in a closed loop, with a feedback information from the second axle representative of the steering angle of any one of the second wheels.

In the illustrated embodiment, the additional actuator 45 is a hydraulic actuator. However, alternatively, it could be an electric actuator.

In case the additional actuator 45 is a hydraulic actuator, the second controlling device 30 can further comprise a pump 48 which is coupled to a hydraulic fluid tank 49 and which is capable of delivering said hydraulic fluid to the hydraulic additional actuator 45, for example through a directional valve 27 controlled by controller 46. The additional actuator thereby controls the exact angular position of the second wheels.

Preferably, the power source capable of operating the additional actuator 45 can be independent of the power source capable of operating the first hydraulic actuator 16. In other words, in the illustrated embodiment, the pumps 25 and 48 are preferably separate.

This arrangement provides a security system which ensures that the power steering system 1 is still at least partially operating, even in case of a failure of one or the other of the first hydraulic actuator 16 and the additional actuator 45, or of one of the pumps 25, 48. Indeed, the power steering system 1 can be dimensioned so that, even if one of the above components fails, the system remains dimensioned to help the driver to turn the wheels, in order to fulfil the regulation requirements in terms of steering wheel force.

Thanks to the provision of the additional actuator 45, the power steering system 1 can be devoid of any link rod between the first axle 7 and the second axle 9 for transmitting the steering movement of the first wheels 8 to the second wheels 10. With this disposition of the invention, the position of the second wheels 10 is not precisely controlled by a mechanical link between the first axle 7 and the second axle 9 as in the prior art, but by the dedicated additional actuator 45.

Of course, the invention is not restricted to the embodiment described above by way of non-limiting example.

## Claims

1. A power steering system for a vehicle (2) having two steered axles, i.e. a first steered axle (7) joining two first wheels (8), and a second steered axle (9) joining two second wheels (10), the power steering system (1) comprising:
- a first controlling device (14) designed to control the steering of at least one of the first wheels (8), said first controlling device (14) comprising:
o a mechanical transmission of the movement from a steering wheel of the vehicle to at least one of the first wheels;
o a first hydraulic actuator (16) which is force-controlled;
- a second controlling device (30) designed to control the steering of at least one of the second wheels (10), said second controlling device (30) comprising a second hydraulic actuator (31) which is force-controlled;
**characterized in that** the second controlling device (30) further comprises an additional actuator (45) capable of acting on at least one of the second wheels (10) simultaneously with the second hydraulic actuator (31), said additional actuator (45) being displacement-controlled, by a controller (46), relative to a position instruction (47).

2. The power steering system according to claim 1, **characterized in that** it is devoid of any link rod between the first axle (7) and the second axle (9) for transmitting the steering movement of the first wheels (8) to the second wheels (10).

3. The power steering system according to claim 1 or claim 2, **characterized in that** the position instruction (47) is set from the position of a component of the mechanical transmission of the movement from a steering wheel of the vehicle to at least one of the first wheels, such as a steering angle detected on a steering column (13).

4. The power steering system according to any one of claims 1 to 3, **characterized in that** the second hydraulic actuator (31) is hydraulically coupled to the first hydraulic actuator (16), so that the pressure received by the second hydraulic actuator (31) is substantially identical to the pressure received by the first hydraulic actuator (16).

5. The power steering system according to any one of claims 1 to 4, **characterized in that** the controller (46) of the second controlling device (30) is capable of controlling the additional actuator (45) according to said position instruction (47) and to the steering angle of the second axle (9).

6. The power steering system according to any one of claims 1 to 5, **characterized in that** the power source (48) capable of operating the additional actuator (45) is independent of the power source (25) capable of operating the first hydraulic actuator (16).

7. The power steering system according to any one of claims 1 to 6, **characterized in that** the additional actuator (45) is a hydraulic actuator.

8. The power steering system according to any one of claims 1 to 7, **characterized in that** the first and second axles are two front axles.

9. The power steering system according to claim 8, **characterized in** the said second steered axle (9) is located rearward from the first steered axle (7)

10. A vehicle having two front steered axles, i.e. a first steered axle (7) joining two first wheels (8), and a second steered axle (9) joining two second wheels (10), said second steered axle (9) being located rearward from the first steered axle (7), **characterized in that** it comprises a power steering system (1) according to any preceding claim.

## Patentansprüche

1. Servolenkungssystem für ein Fahrzeug (2), das zwei gelenkte Achsen aufweist, d.h. eine erste gelenkte Achse (7), die zwei erste Räder (8) verbindet, und eine zweite gelenkte Achse (9), die zwei zweite Räder (10) verbindet, wobei das Servolenkungssystem (1) umfasst:
- eine erste Steuervorrichtung (14), die dazu ausgelegt ist, das Lenken wenigstens eines der ersten Räder (8) zu steuern, wobei die erste Steuervorrichtung (14) umfasst:
• eine mechanische Übertragung der Bewegung von einem Lenkrad des Fahrzeugs auf wenigstens eines der ersten Räder,
• ein erstes hydraulisches Stellglied (16), das zwangsgesteuert ist,
- eine zweite Steuervorrichtung (30), die dazu ausgelegt ist, das Lenken wenigstens eines der zweiten Räder (10) zu steuern, wobei die zweite Steuervorrichtung (30) ein zweites hydraulisches Stellglied (31) umfasst, das zwangsgesteuert ist,
**dadurch gekennzeichnet, dass** die zweite Steuervorrichtung (30) außerdem ein zusätzliches Stellglied (45) umfasst, das gleichzeitig mit dem zweiten hydraulischen Stellglied (31) auf wenigstens eines der zweiten Räder (10) wirken kann, wobei das zusätzliche Stellglied (45) durch eine Steuereinrichtung (46) relativ zu einem Positionsbefehl (47) wegegesteuert ist.

2. Servolenkungssystem nach Anspruch 1, **dadurch gekennzeichnet, dass** es keine Verbindungsstange zwischen der ersten Achse (7) und der zweiten Achse (9) zur Übertragung der Lenkbewegung von den ersten Rädern (8) auf die zweiten Räder (10) aufweist.

3. Servolenkungssystem nach Anspruch 1 oder 2, **dadurch gekennzeichnet, dass** der Positionsbefehl (47) von der Position einer Komponente der mechanischen Übertragung der Bewegung von einem Lenkrad des Fahrzeugs auf wenigstens eines der ersten Räder gesetzt wird, wie z.B. einem Lenkwinkel, der an einer Lenksäule (13) erfasst wird.

4. Servolenkungssystem nach irgendeinem der Ansprüche 1 bis 3, **dadurch gekennzeichnet, dass** das zweite hydraulische Stellglied (31) hydraulisch mit dem ersten hydraulischen Stellglied (16) gekoppelt ist, so dass der von dem zweiten hydraulischen Stellglied (31) empfangene Druck im Wesentlichen zu dem Druck identisch ist, der von dem ersten hydraulischen Stellglied (16) empfangen wird.

5. Servolenkungssystem nach irgendeinem der Ansprüche 1 bis 4, **dadurch gekennzeichnet, dass** die Steuereinrichtung (46) der zweiten Steuervorrichtung (30) das zusätzliche Stellglied (45) dem Positionsbefehl (47) und dem Lenkwinkel der zweiten Achse (9) entsprechend steuern kann.

6. Servolenkungssystem nach irgendeinem der Ansprüche 1 bis 5, **dadurch gekennzeichnet, dass** die Energiequelle (48), die das zusätzliche Stellglied (45) betreiben kann, unabhängig von der Energiequelle (45) ist, die das erste hydraulische Stellglied (18) betreiben kann.

7. Servolenkungssystem nach irgendeinem der Ansprüche 1 bis 6, **dadurch gekennzeichnet, dass** das zusätzliche Stellglied (45) ein hydraulisches Stellglied ist.

8. Servolenkungssystem nach irgendeinem der Ansprüche 1 bis 7, **dadurch gekennzeichnet, dass** die erste und zweite Achse zwei Vorderachsen sind.

9. Servolenkungssystem nach Anspruch 8, **dadurch gekennzeichnet, dass** die zweite gelenkte Achse (9) hinter der ersten gelenkten Achse (7) angeordnet ist.

10. Fahrzeug mit zwei vorderen gelenkten Achsen, d.h. einer ersten gelenkten Achse (7), die zwei erste Räder (8) verbindet, und einer zweiten gelenkten Achse (9), die zwei zweite Räder (10) verbindet, wobei die zweite gelenkte Achse (9) hinter der ersten gelenkten Achse (7) angeordnet ist, **dadurch gekennzeichnet, dass** es ein Servolenkungssystem (1) nach irgendeinem vorhergehenden Anspruch umfasst.

## Revendications

1. Système de direction assistée pour un véhicule (2) doté de deux essieux directeurs, c'est-à-dire un premier essieu directeur (7) reliant entre elles deux premières roues (8) et un second essieu directeur (9) reliant entre elles deux secondes roues (10), le système de direction assistée (1) comprenant :
- un premier dispositif de commande (14) conçu pour commander la direction d'au moins une des premières roues (8), ledit premier dispositif de commande (14) comprenant :
- une transmission mécanique du mouvement d'un volant du véhicule vers au moins une des premières roues ;
- un premier actionneur hydraulique (16) à asservissement de force ;
- un second dispositif de commande (30) conçu pour commander la direction d'au moins une des secondes roues (10), ledit second dispositif de commande (30) comprenant un second actionneur hydraulique (31) à asservissement de force ;
**caractérisé en ce que** le second dispositif de commande (30) comprend en outre un actionneur supplémentaire (45) capable d'agir sur au moins une des secondes roues (10) simultanément avec le second actionneur hydraulique (31), ledit actionneur supplémentaire (45) étant commandé par déplacement, par un contrôleur (46), par rapport à une instruction de position (47).

2. Système de direction assistée selon la revendication 1, **caractérisé en ce qu'**il est dépourvu de toute tige de liaison entre le premier essieu (7) et le second essieu (9) pour transmettre le mouvement de direction des premières roues (8) aux secondes roues (10).

3. Système de direction assistée selon la revendication 1 ou 2, **caractérisé en ce que** l'instruction de position (47) est placée à partir de la position d'un composant de la transmission mécanique du mouvement allant d'un volant du véhicule vers au moins une des premières roues, tel qu'un angle de direction détecté sur une colonne de direction (13).

4. Système de direction assistée selon l'une quelconque des revendications 1 à 3, **caractérisé en ce que** le second actionneur hydraulique (31) est couplé hydrauliquement au premier actionneur hydraulique (16), de sorte que la pression reçue par le second actionneur hydraulique (31) est sensiblement identique à la pression reçue par le premier actionneur hydraulique (16).

5. Système de direction assistée selon l'une quelconque des revendications 1 à 4, **caractérisé en ce que** le contrôleur (46) du second dispositif de commande (30) est capable de commander l'actionneur supplémentaire (45) en fonction de ladite instruction de position (47) et de l'angle de direction du second essieu (9).

6. Système de direction assistée selon l'une quelconque des revendications 1 à 5, **caractérisé en ce que** la source d'alimentation en courant (48) capable d'utiliser l'actionneur supplémentaire (45) est indépendante de la source d'alimentation en courant (25) capable d'utiliser le premier actionneur hydraulique (16).

7. Système de direction assistée selon l'une quelconque des revendications 1 à 6, **caractérisé en ce que** l'actionneur supplémentaire (45) est un actionneur hydraulique.

8. Système de direction assistée selon l'une quelconque des revendications 1 à 7, **caractérisé en ce que** les premier et second essieux sont deux essieux avant.

9. Système de direction assistée selon la revendication 8, caractérisé dans le ledit second essieu directeur (9) est positionné vers l'arrière par rapport au premier essieu directeur (7)

10. Véhicule ayant deux essieux directeurs avant, c'est-à-dire un premier essieu directeur (7) reliant entre elles deux premières roues (8) et un second essieu directeur (9) reliant entre elles deux secondes roues (10), ledit second essieu directeur (9) étant positionné vers l'arrière par rapport au premier essieu directeur (7), **caractérisé en ce qu'**il comprend un système de direction assistée (1) selon l'une quelconque des revendications précédentes.
